# EUROPEAN PATENT APPLICATION

(11) **EP 4 503 377 A1**
(43) Date of publication of application: **05.02.2025**
(21) Application number: 24188811.4
(22) Date of filing: 16.07.2024
(51) Int. Cl.: H02J 7/00, H01R 13/62

(54) **ELECTRONIC DEVICE CHARGER**

(30) Priority: 17.07.2023 CN 202321877668 U
(71) Applicant: Anker Innovations Technology Co., Ltd., 410000 Changsha Hunan (CN)
(72) Inventor: LUO, Yong, Shenzhen, 518055 (CN)
(74) Representative: Bittner, Thomas L.

(57) **Abstract**

Examples of the present application disclose a charger comprising a housing that includes a cassette and a cover having a first charging surface, the cover being provided with a charging port, and a first electrical connector being provided corresponding to the charging port; wherein the first electrical connector and the housing are movable relative to each other to enable switching of the charger between a first state and a second state. The charger is designed to include the first state in which the first electrical connector is protruding from the first charging surface and the second state in which the first electrical connector is not protruding from the charging surface, so that the configuration of the charger can be flexibly adjusted in conjunction with the use of the charger, and the simplicity in design and cost-effectiveness, which promotes the widespread use of the charger.

## Description

### Field

The application relates to the technical field of charging equipment, and in particular to a charger.

### Background

With the development of technology, the use of electronic devices has become increasingly widespread. Electronic devices consume power when they are in use. Therefore, when the power level on the electronic device is low, a charger is needed to ensure the normal operation of the electronic device.

When the charger charges an electronic device, an electrical connection between the charger and the electronic device may be necessary. In the related technology, the electrical connector on the charger for electrically coupling with the electronic device is usually protruding from the charger and remains fixed in place, which may cause the electrical connector to wear out.

### Summary

Examples of the present application provide a charger for solving a problem in the related art where the electrical connection device (e.g., the electrical connector) is projected outwardly from the charger and remains fixed in place, making it prone to wear and tear Additionally, even if the electrical connection device is designed to no longer be projected outwardly from the charger when it is not in use, the structure of the charger tends to be relatively complex, resulting in higher design cost.

In a first aspect, examples of the present application provide a charger comprising:
a housing, the housing comprising a cassette and a cover, the cassette provided with an opening, the cover is connected to the cassette and positioned corresponding to the opening,
the cover having a first charging surface and a first inner wall surface opposite to the first charging surface, the cover provided with a charging port running through the first charging surface and the first inner wall surface;
a first electrical connector, the first electrical connector being positioned corresponding to the charging port;

The cover is connected to the cassette, the first electrical connector and the housing are movable relative to each other to switch the charger between a first state and a second state, the first state having at least a portion of the first electrical connector disposed on one side of the first charging surface that is facing away or distant from the first inner wall surface, the second state having the first electrical connector disposed on another side of the first charging surface that is close to or facing the first inner wall surface. For example, in the first state, the at least a portion of the first electrical connector in the first state projects outwardly from the first charging surface, and in the second state, the first electrical connector in the second state does not project outwardly from the first charging surface.

In some of these examples, the charger also includes: A first anti-misalignment device, the first anti-misalignment device connected to a same carrier as the first electrical connector, the first anti-misalignment device comprising one or more first magnets.

In particular, when an electronic device is provided on the first charging surface, the first anti-misalignment device is configured to magnetically approach each other with a second anti-misalignment device of the electronic device to enable a switching of the charger from the second state to the first state.

In some of these examples, a first magnet, of the one or more first magnets, has opposing first magnetic pole and second magnetic pole along an extension direction, the polarity of the first magnetic pole being opposite to the polarity of the second magnetic pole, and the extension direction of the first magnet being parallel to the first charging surface; and/or, the carrier is located or disposed within the housing.

In some of these examples, the first anti-misalignment device comprises two of the first magnets, the two of the first magnets being located on opposite sides of the first electrical connector.

In some of these examples, the charger also includes at least one of:
a main circuit board, the main circuit board being provided or disposed within the housing; and
a first circuit board. At least one of the following may be provided: the first circuit board being disposed within the housing, the first circuit board being disposed closer to the cover than the main circuit board, the first circuit board being connected with the first electrical connector and
being electrically coupled to the first electrical connector, and the first circuit board being movable with respect to the housing so as to enable that the first electrical connector is movable with respect to the housing.

In some of these examples, a mount is attached to the first circuit board and the first electrical connector is connected to the mount on the first circuit board.

In some of these examples, the charger also includes: a second circuit board. At least one of the following may be provided: the second circuit board being located or disposed within the housing, the second circuit board being connected to the cover, the second circuit board being electrically coupled to the main circuit board, the second circuit board being provided in such a way as to avoid the first electrical connector, and the first circuit board being movable in relation to the second circuit board in order to enable that the first electrical connector is movable in relation to the housing.

At least one of the following may be provided: The first circuit board is further provided or connected with a second electrical connector; the second circuit board is provided or connected with a third electrical connector for use in conjunction with the second electrical connector; in the first state, the second electrical connector is in contact with and electrically coupled to third electrical connector to electrically couple the first circuit board with the main circuit board via the second circuit board; and in the second state, the second electrical connector is separate and electrically de-coupled from the third electrical connector to enable the first circuit board to be de-coupled electrically from the second circuit board, and the main circuit board.

In some of these examples, the charger also includes: an elastic member, the elastic member connecting a carrier to which the first electrical connector is connected with the cover, the elastic member preferably being configured to actuate or enable the charger to switch from the first state to the second state.

In some of these examples, the first electrical connector is connected to the cassette, the cover and the cassette being movable relative to each other to switch the charger between the first state and the second state.

In a second aspect, examples of the present application provide a charger comprising:
a housing, the housing comprising a cassette and a cover, the cassette having an opening, the cover coupled to the cassette and positioned corresponding to the opening, the cover having a first charging surface and a first inner wall surface opposite to the first charging surface, the cover provided with a charging port running through the first charging surface and the first inner wall surface;
a first electrical connector, the first electrical connector being provided or positioned corresponding to the charging port;

The first electrical connector is connected to the cassette, the cover and the cassette being movable relative to each other to switch the charger between a first state and a second state, wherein in the first state, at least a portion of the first electrical connector is disposed on one side of the first charging surface facing away or distant from the first inner wall surface, and wherein in the second state, the first electrical connector is disposed on another side of the first charging surface close to or facing the first inner wall surface.. For example, in the first state, at least a portion of the first electrical connector projecting projects outwardly from the first charging surface, and in the second state, the first electrical connector does not project outwardly from the first charging surface.

In some of these examples, it also includes: a main circuit board, the main circuit board being located within the housing, the main circuit board being connected to the cassette, the main circuit board being provided with the first electrical connection and being electrically coupled to the first electrical connection.

In some of these examples, the charger also includes: a spacer, which is disposed in the housing and connected to the cassette, wherein preferably at least one of the following is provided: the spacer divides the holding chamber of the housing into a first chamber and a second chamber, the first chamber is closer to the cover than the second chamber, the first chamber is connected to the charging port of the cover, the spacer is provided with a connecting hole connecting the first chamber to the second chamber, the main circuit board is located in the second chamber, the first electrical connector is provided or positioned corresponding to the connecting hole, and the cover is movable relative to the spacer to enable relative movement of the cover and the cassette.

In some of these examples, the charger also includes: an elastic member, the elastic member being provided or positioned between the spacer and the cover, the elastic member being used to actuate or enable the charger to switch from the first state to the second state.

In some of these examples, when an electronic device is provided on the first charging surface, the cover is used to drive or switch the charger from the second state to the first state under the force of gravity of the electronic device.

The charger of the present application is designed so that the charger comprises a first state in which the first electrical connection is protruding or projecting from the first charging surface and a second state in which the first electrical connection is not protruding or projecting from the charging surface, so that the form of the charger can be flexibly adjusted in relation to the use of the charger. For example, when the charger is used to charge the electronic device, the charger may be placed in the first state so that the first electrical connection of the charger is electrically coupled to the electrical connection device of the electronic device. And when the charger is idle, the charger can be made to be in the second state so as to avoid wear and tear of the first electrical connection of the charger.

In the examples of this application, the switching of the charger between the first state and the second state is achieved by the movement of the first electrical connector with respect to the housing or the movement of the cover of the housing with respect to the cassette, which has simplicity in design principle, low in design cost, and promotes the widespread use of the charger.

### Brief Description of the Drawings

In order to more clearly illustrate the technical solutions in the examples or prior art of the present application, the accompanying drawings to be used in the description of the examples or prior art will be briefly introduced below, and it will be obvious that the accompanying drawings in the following description are only some of the examples of the present application, and that for a person of ordinary skill in the field, other accompanying drawings can be obtained based on the accompanying drawings without creative labor.
- Fig. 1: is a schematic diagram of a structure of a charger provided by an example of the present application in a state of use;
- Fig. 2: is a schematic diagram of a three-dimensional structure of a charger provided in a first example of the present application in a first state;
- Fig. 3: is a schematic diagram of a partial section structure of the charger illustrated in Figure 2;
- Fig. 4: is a schematic diagram of the three-dimensional structure of the charger illustrated in Figure 2 in a second state;
- Fig. 5: is a schematic diagram of a partial section structure of the charger illustrated in Figure 4;
- Fig. 6: is a schematic diagram of a three-dimensional exploded structure of the charger illustrated in Figure 2;
- Fig. 7: is a schematic diagram of a partial three-dimensional structure of the charger illustrated in Figure 2;
- Fig. 8: is a schematic diagram of a partial three-dimensional exploded structure of the charger illustrated in Figure 2;
- Fig. 9: is a schematic diagram of a three-dimensional structure of a charger provided in a second example of the present application in a first state;
- Fig. 10: is a schematic diagram of a three-dimensional exploded structure of a charger provided in a third example of the present application.

### Illustrated by the accompanying markings:

10, Charger;
11, housing; 111, cover; 1111, first charging surface; 1112, first inner wall surface; 1113, charging port; 112, cassette; 1121, opening; 113, holding chamber; 1131, first chamber; 1132, second chamber;
12, First electrical connector;
13, Main circuit board;
14, a first circuit board; 141, a second electrical connector; 142, a mount; 1421, a first mounting position; 1422, a first sub-mounting slot;
15, second circuit board; 151, third electrical connector; 152, avoidance hole;
16, Elastic members;
17, Spacer; 171, Avoidance hole; 172, Connecting hole;
18. Guide posts;
19, first anti-misalignment device; 191, first magnet; 1911, first magnetic pole; 1912, second magnetic pole;
20, an electronic device; 21, a second anti-misalignment device; 22, a second charging surface.

### Brief description

In order to make the purpose, technical program and advantages of the present application clearer, the following will be described in further detail in connection with the accompanying drawings of the example mode of the present application.

When the following description relates to the accompanying drawings, the same numerals in the different accompanying drawings indicate the same or similar elements unless otherwise indicated. The examples described in the following exemplary examples do not represent all examples consistent with the present application. Rather, they are only examples of devices and methods that are consistent with some aspects of this application as detailed in the appended claims.

### Example 1

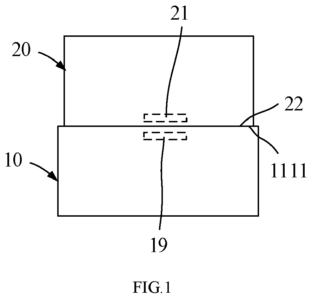

Referring to FIG. 1, an example of the present application provides a charger 10, the charger 10 being used to charge an electronic device 20. The electronic device 20 may be a mobile phone, a computer, a wearable device, and the like that use electricity arbitrarily, without limitation.

The charger 10 may be a charger 10 that needs to be electrically coupled to both the power-using device and the power supply when in use, or it may be a mobile power supply that can be electrically coupled to both the power-using device and the power supply alone. Among them, the mobile power supply has a power storage function, which is applicable to various scenarios such as daily office work, travelling, and so on. Among them, the electrical connection can be a radio connection, for example, wireless charging can be realized by electromagnetic induction, electromagnetic resonance, radio waves and so on; the electrical connection can also be a wired electrical connection, for example, wired charging can be realized by means of a charging cable, a data cable and so on.

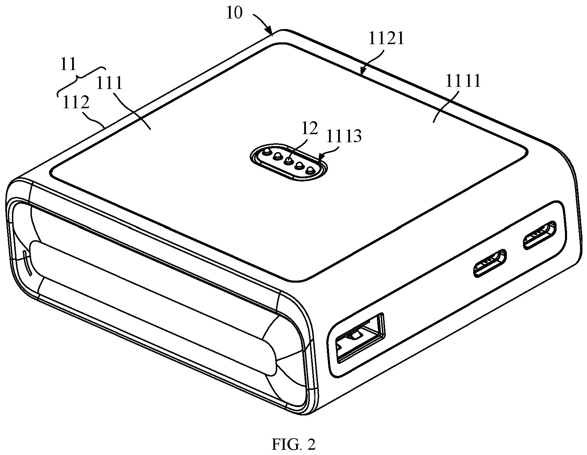

Referring to Figures 2 to 5, the charger 10 includes a housing 11 and a first electrical connector 12.

The housing 11 includes a cover 111 and a cassette 112, the cassette 112 is provided with an opening 1121, and the cover 111 is provided corresponding to the opening 1121; the cover 111 has a first charging surface 1111 and a first inner wall surface 1112 that is opposite to the first charging surface 1111, the cover 111 is provided with a charging port 1113 that runs through the first charging surface 1111 and the first inner wall surface 1112, and a first electrical connector 12 that is positioned corresponding to the charging port 1113.

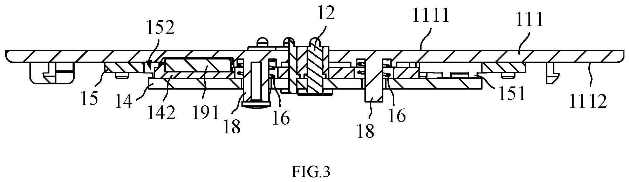

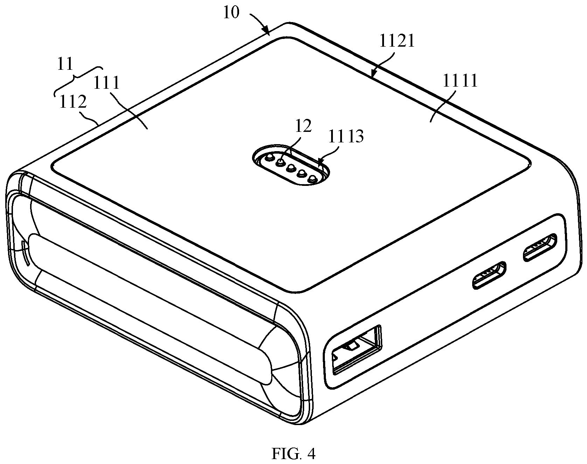

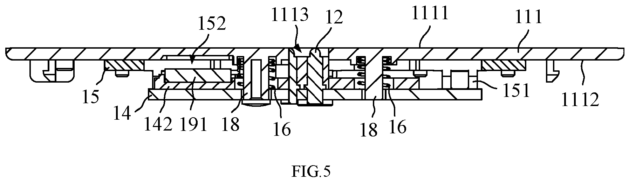

The first electrical connector 12 and the cover 111 are movable relative to each other to switch the charger 10 between a first state and a second state, wherein in the first state, at least a portion of the first electrical connector 12 is located on one side (e.g., an outer side) of the first charging surface 1111 that is facing away or distant from the first inner wall surface 1112, as can be seen in FIGS. 2 and 3, and wherein in the second state, the first electrical connector 12 is located on another side (e.g., an inner side) of the first charging surface 1111 that is close to or facing the first inner wall surface 1112, as can be seen in FIGS. 4 and 5.

In the first state, at least a portion of the first electrical connector 12 is located on the one side of the first charging surface 1111 that is facing away or distant from the first inner wall surface 1112, the at least a portion of the first electrical connector 12 is protruding outwardly from the first charging surface 1111, which facilitates the electrical connection of the first electrical connector 12 to the electrical connection device of the electronic device 20. In the second state, the first electrical connector 12 is located on the other side of the first charging surface 1111 that is close to or facing the first inner wall surface 1112, the first electrical connector 12 is not projected outwardly from the first charging surface 1111, e.g., being flush with the first charging surface 1111 or located on the inner side of the first charging surface 1111, which may enable the housing 11 to provide a protective effect on the first electrical connector 12 to avoid wear and tear of the first electrical connector 12 .

The first electrical connector 12 is an electrical connection device of the charger 10 for making an electrical connection with the electronic device 20 for charging the electronic device 20. As documented above, the electrical connection between the first electrical connector 12 and the electrical connection device of the electronic device 20 may be a wired electrical connection or a radio connection. In the example of the present application, the electrical connection between the charger 10 and the electronic device 20 is a wired electrical connection, and the first electrical connection 12 may be a pogo-pin type electrical connector, a USB type electrical connector, a type-c type electrical connector, and so on, without limitation in comparison.

It is noted that when the charger 10 is used to charge the electronic device 20, the charger 10 may be made to be in a first state so that the first electrical connector 12 of the charger 10 is electrically coupled to the electrical connection device of the electronic device 20. And when the charger 10 is idle, the charger 10 may be made to be in a second state so that the first electrical connector 12 of the charger 10 is not worn out.

In the example of the present application, the first electrical connector 12 and the cover 111 being movable relative to each other may be as follows: the cover 111 connects to the cassette 112, and the first electrical connector 12 and the housing 11 are movable relative to each other to enable the charger 10 to be switched between the first state and the second state. At this time, when the charger 10 switches between the first state and the second state, the entire housing 11 may remain motionless.

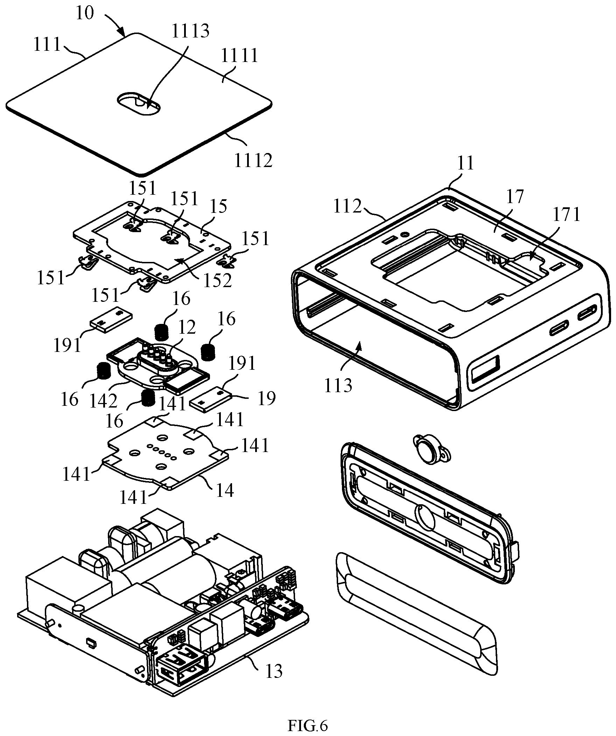

The cover 111 and the cassette 112 may be directly connected to each other or indirectly connected to each other. If the cover 111 is directly connected to the cassette 112, the two may be removably connected and so on. If the cover 111 is indirectly connected to the cassette 112, refer to FIG. 6, the charger 10 further includes a spacer 17, the spacer 17 is located in the housing 11 and is connected to the cassette 112, and the cover 111 is connected to the spacer 17 to achieve the connection between the cover 111 and the cassette 112. Among them, the cover 111 and the spacer 17 may be removably connected and so on. It should be noted that the spacer 17 needs to be set away from the first electrical connector 12 to avoid obstructing the movement of the first electrical connector 12, such as, for example, the spacer 17 is provided with an avoidance hole 171 corresponding to the first electrical connector 12, and so on.

The removable connections in the examples of the present application may all be snap-fit connections, threaded connections, and the like, without limitation.

An elastic member 16 may be connected between the carrier connected to the first electrical connector 12 and the housing 11, and the elastic member 16 may be used to drive the charger 10 to switch from the first state to the second state. For example, the elastic member 16 is designed to be in a deformed state in the first state, and the elastic member 16 is in a restored state in the second state, and the elastic restoring force of the elastic member 16 is used to realize the switching of the charger 10 from the first state to the second state, so that the switching of the charger 10 from the first state to the second state can be realized or enabled without the need for additional devices, and the structure of the charger 10 can be simplified. Among them, the elastic member 16 may be a compression spring, a shrapnel, or the like, and is not limited to any device having elasticity.

If the charger 10 is to be switched from the second state to the first state, refer to FIG. 1, the switching of the charger 10 from the second state to the first state can be achieved by the magnetic attraction force between the first anti-misalignment device 19 of the charger 10 and the second anti-misalignment device 21 of the electronic device 20 when the electronic device 20 is placed on the first charging surface 1111, so that the switching of the charger 10 from the second state to the first state can be achieved without any additional device, simplifying the structure of the charger 10. The magnetic attraction force between the first anti-misalignment device 19 and the second anti-misalignment device 21 can also make the connection between the electronic device 20 and the charger 10 more stable. Among them, the magnetic suction force of the first anti-misalignment device 19 and the second anti-misalignment device 21 can overcome the elastic force of the elastic member 16, so that the elastic member 16 can undergo deformation, so as to realize the switching of the charger 10 from the second state to the first state.

It is to be noted that in realizing the switching of the charger 10 from the second state to the first state through the magnetic attraction force between the first anti-misalignment device 19 of the charger 10 and the second anti-misalignment device 21 of the electronic device 20, it is also possible to realize the effect that the charger 10 is capable of charging the matching electronic device 20 only, e.g., the charger 10 is capable of charging only the second anti-misalignment device 21 having the matching first anti-misalignment device 19 of the electronic device 20, which can enhance the product experience and reliability of the charger 10.

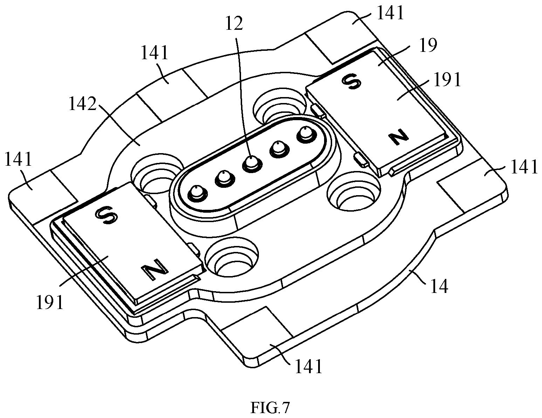

Specifically, referring to FIG. 7, the first electrical connector 12 and the first anti-misalignment device 19 may be connected to the same carrier, so that when the electronic device 20 is placed on the first charging surface 1111, the first anti-misalignment device 19 and the second anti-misalignment device 21 cooperate with each other to achieve the corrective alignment between the charger 10 and the electronic device 20, and then the first anti-misalignment device 19 and the second anti-misalignment device 21 are magnetically attracted to each other, which may drive the first electrical connector 12, the first anti-misalignment device 19 and the carrier to move to realize that the charger 10 is in a first state.

The same carrier to which the first electrical connector 12 and the first anti-misalignment device 19 are connected may be the main circuit board 13, and the same carrier to which the first electrical connector 12 and the first anti-misalignment device 19 are connected may also be a device other than the main circuit board 13. Since the main circuit board 13 is provided with more electronic devices and has a larger size, if the first electrical connector 12 and the first anti-misalignment device 19 are connected to the main circuit board 13, the magnetic field strength required to achieve the movement of the main circuit board 13 with respect to the cover 111 is higher, and the requirements for the first anti-misalignment device 19 are higher, therefore, in the example of this application, the first electrical connector 12 and the first anti-misalignment device 19 are connected to the other devices outside the main circuit board 13. to other devices outside the main circuit board 13.

Specifically, referring to FIGS. 6 and 7, the charger 10 includes a main circuit board 13 and a first circuit board 14, the main circuit board 13 and the first circuit board 14 are located in the housing 11, the first circuit board 14 is closer to the cover 111 than the main circuit board 13, the first circuit board 14 is connected to the first electrical connector 12 and the first anti-misalignment device 19, and the first circuit board 14 is electrically coupled to the first electrical connector 12. The first circuit board 14 is movable relative to the housing 11 to realize that the first electrical connector 12 is movable relative to the housing 11. The main circuit board 13 is connected to the housing 11, for example, the main circuit board 13 is connected to the cassette 112 in the housing 11.

Further, the first circuit board 14 is connected to a mount 142, and the first electrical connector 12 and the first anti-misalignment device 19 are both connected to the mount 142 on the first circuit board 14. In this way, the first electrical connector 12 and the first anti-misalignment device 19 can be fixed to the mount 142 and then mounted together on the first circuit board 14, which is easier to install than directly mounting the first electrical connector 12 and the first anti-misalignment device 19 on the first circuit board 14. This makes installation easier than directly installing the first electrical connector 12 and the first anti-misalignment device 19 on the first circuit board 14.

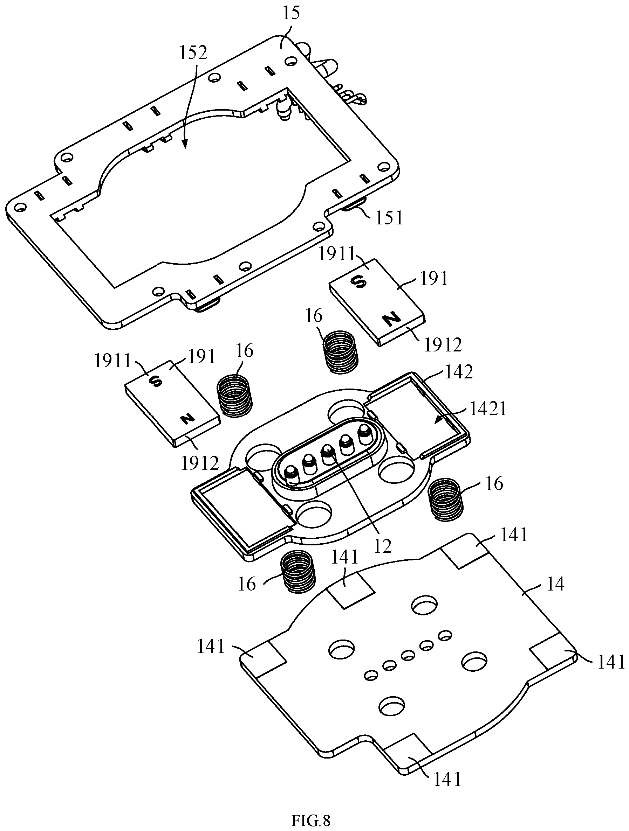

Referring to FIG. 8, the mount 142 may be provided with a first mounting position 1421 for mounting the first anti-misalignment device 19, and the first mounting position 1421 is provided to facilitate mounting and positioning of the first anti-misalignment device 19 on the mount 142 on the one hand to enhance the assembly efficiency between the mount 142 and the first anti-misalignment device 19, and on the other hand, to enhance the connection between the mount 142 and the first anti-misalignment device 19, and the stability of the mount 142 and the first anti-misalignment device 19. Among them, the first mounting position 1421 may be a mounting groove, a mounting hole, and the like, without limitation.

Specifically, the first mounting position 1421 includes a first sub-mounting slot 1422 corresponding to the first magnet 191, and if the first anti-misalignment device 19 includes a plurality of first magnets 191, the first mounting position 1421 includes a plurality of first sub-mounting slots 1422. If the first anti-misalignment device 19 also includes a third magnet (not shown in the figure), the first mounting position 1421 also includes a second sub-mounting slot (not shown in the figure) corresponding to the third magnet. mounting slot (not shown in the figures).

The mount 142 may be provided with a second mounting position (not shown in the drawings) for mounting the first electrical connector 12, and the second mounting position is provided to facilitate mounting and positioning of the first electrical connector 12 on the mount 142 on the one hand, to enhance the assembly efficiency between the mount 142 and the first electrical connector 12, and on the other hand, to enhance the solidity of the connection between the mount 142 and the first electrical connector 12. Among them, the second mounting position may be a mounting hole and the like, without limitation. Specifically, if the first electrical connector 12 is a pogo-pin type electrical connector, the first electrical connector 12 includes a plurality of pins, and the second mounting position may include a first sub-mounting hole corresponding to each pin.

Among them, the mount 142 can be made of plastic and other materials, which has the advantages of low manufacturing cost and light weight.

The first circuit board 14 may be directly electrically coupled to the main circuit board 13, e.g., it may be electrically coupled by means of wires, etc., at which point the first circuit board 14 may always remain electrically coupled to the main circuit board 13, regardless of whether it is in the first state or the second state.

Referring again to FIGS. 5 and 6, the first circuit board 14 may also be electrically coupled to the main circuit board 13 via the second circuit board 15, specifically, the second circuit board 15 is disposed within the housing 11 and is connected to the cover 111, the second circuit board 15 is electrically coupled to the main circuit board 13, such as electrically coupled by means of wires or the like, and the first circuit board 14 and the second circuit board 15 may be movable relative to each other in order to realize that the first electrical connector 12 The first circuit board 14 and the second circuit board 15 are movable relative to the cover 111; wherein the first circuit board 14 is connected to a second electrical connector 141, the second circuit board 15 is connected to a third electrical connector 151 that is used in conjunction with the second electrical connector 141, and in a first state the second electrical connector 141 is in contact with the third electrical connector 151 and is electrically coupled to realize that the first circuit board 14 is electrically coupled to the main circuit board 13 via the second circuit board 15, and The second electrical connector 141 in the second state is separated and de-connected from third electrical connector 151 to realize that the first circuit board 14 is disconnected electrically from the second circuit board 15 and the main circuit board 13.

Since the first circuit board 14 and the second circuit board 15 are electrically coupled by a contact type, so that the first circuit board 14 does not need to be electrically coupled with the second circuit board 15 or the main circuit board 13 during the movement of the cover 111 relative to the cover 111, it can reduce the binding force of the first circuit board 14 during the movement of the first circuit board 14 relative to the cover 111, and improve the smoothness of the movement of the first circuit board 14 relative to the cover 111.

The second circuit board 15 is connected to the cover 111, which may be the second circuit board 15 fit and connected to the cover 111, etc., without limitation. The second electrical connector 141 may be connected to the side of the first circuit board 14 facing the second circuit board 15, and the second electrical connector 141 may be a conductive shrapnel that is cocked with respect to the first circuit board 14, or a conductive sheet that is laid flat on the first circuit board 14, and so forth, without limitation. third electrical connector 151 may be connected to the side of the second circuit board 15 facing the first circuit board 14, and third electrical connector 151 may be a conductive elastic sheet that is cocked with respect to the second circuit board 15 or a conductive sheet that is laid flat on the second circuit board 15, and so on, without limitation.

The second circuit board 15 is provided avoiding the first electrical connector 12 and/or the first anti-misalignment device 19, e.g., the second circuit board 15 is provided with avoidance holes 152 corresponding to the first electrical connector 12 and/or the first anti-misalignment device 19, wherein the avoidance holes 152 corresponding to the first electrical connector 12, the avoidance holes 152 corresponding to the first anti-misalignment device 19 on the second circuit board 15 may be spaced apart or may be mutually connected. Of course, the avoidance holes 152 provided in the second circuit board 15 may also be provided directly corresponding to the entire mount 142, without limitation. The avoidance holes 171 in the spacer 17 can be provided directly corresponding to the entire second circuit board 15.

The elastic member 16 may be provided between the first circuit board 14 and the cover 111, or, alternatively, between the first circuit board 14 and the second circuit board 15. In the example of the present application, the elastic member 16 is provided between the first circuit board 14 and the cover 111, the elastic member 16 is a compression spring, the cover 111 is provided with a guide post 18, the compression spring is set on the guide post 18, and the first circuit board 14 and the mount 142 are provided with a guiding hole corresponding to the guide post 18.

The aperture of the guiding hole of the first circuit board 14 may be smaller than the outer diameter of the compression spring to avoid the compression spring slipping out from the guiding hole of the first circuit board 14; and/or, the guide post 18 is provided with a gasket and a locking device (e.g., a bolt, etc.) on the side of the guide post 18 backing away from the cover 111, wherein the locking device secures the gasket to the side of the guide post 18 backing away from the cover 111, and wherein the outer diameter of the gasket is larger than the outer diameter of the compression spring to avoid the compression spring slipping out from the guide post 18, the first circuit board 14, the second circuit board 15, and the mount 142 are provided to avoid the guide post 18, such as providing guide holes and the like that avoid the guide post 18.

Next, the first anti-misalignment device 19 is further described.

The first anti-misalignment device 19 is used in conjunction with the second anti-misalignment device 21 of the electronic device 20 to correct the relative position of the electronic device 20 and the charger 10 when the electronic device 20 is placed on the first charging surface 1111, such as, when the electronic device 20 is placed on the first charging surface 1111, the first anti-misalignment device 19 and the second anti-misalignment device 21 cooperate with each other to actuate or enable the relative movement of the electronic device 20 and the charger 10 relative movement, so that the first electrical connector 12 on the charger 10 and the electrical connection on the electronic device 20 can be aligned, so that the charger 10 can charge the electronic device 20 and improve the charging efficiency of the charger 10 when charging the electronic device 20.

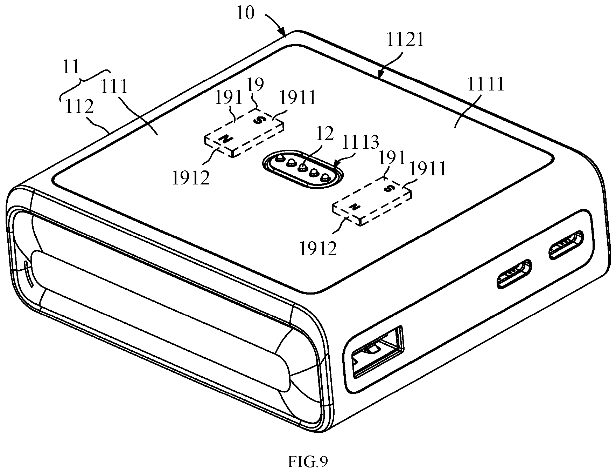

Referring to FIG. 9, the first anti-misalignment device 19 includes a first magnet 191, the first magnet 191 has opposing first magnetic poles 1911 and second magnetic poles 1912 along an extension direction, the polarity of the first magnetic poles 1911 being opposite to the polarity of the second magnetic poles 1912, and the extension direction of the first magnet 191 being substantially parallel to the first charging surface 1111. In this way, when the electronic device 20 is placed on the first charging surface 1111, both poles of the first magnet 191 of the charger 10 can perform the positioning correction effect, and compared to designing the extension direction of the first magnet 191 to be perpendicular to the first charging surface 1111 so that both poles of the individual first magnets 191 can perform the positioning correction function, better positioning correction function can be achieved with fewer magnets, and the number of magnets can be reduced. In terms of the positioning correction function, the size of the charger 10 can be reduced. It should be noted that the extension direction of the first magnet 191 may also be designed to be substantially perpendicular to the first charging surface 1111, without limitation.

The first charging surface 1111 is a surface of the charger 10 for carrying the electronic device 20 when charging the electronic device 20. The first charging surface 1111 may be a plane, a curved surface, a combination of a plane and a plane, a combination of a plane and a curved surface, or a combination of a curved surface and a curved surface, and the like, without limitation.

The electronic device 20 has a second charging surface 22, the second charging surface 22 being a surface on the electronic device 20 proximate the first charging surface 1111 when the charger 10 is charging the electronic device 20. The second charging surface 22 may be flat, curved, a combination of flat and flat, a combination of flat and curved, or a combination of curved and curved, and the like, without limitation.

The second anti-misalignment device 21 includes a second magnet (not shown in the drawings), the second magnet having opposite third magnetic poles and fourth magnetic poles along the extension direction, the polarity of the third magnetic poles being opposite to the polarity of the fourth magnetic poles, and the extension direction of the second magnet being substantially parallel to the second charging surface 22. In this way, when the electronic device 20 is placed on the first charging surface 1111, both poles of the second magnet of the electronic device 20 can perform the positioning correction effect, and compared to designing the extension direction of the second magnet to be perpendicular to the second charging surface 22 so that only one pole of a single second magnet can perform the positioning correction effect, a better positioning correction function can be achieved with fewer magnets, and the size of the electronic device 20 can be reduced. The size of the electronic device 20 can be reduced. It should be noted that the extension direction of the second magnet may also be designed to be substantially perpendicular to the first charging surface 1111, without limitation.

Specifically, when the electronic device 20 is placed on the first charging surface 1111, one of the third magnetic pole and the fourth magnetic pole of the second magnet, which is of opposite polarity to the first magnetic pole 1911, will move in a direction proximate to the first magnetic pole 1911, and one of the second magnetic pole 1912, which is of opposite polarity to the second magnetic pole 1912, will move in a direction proximate to the second magnetic pole 1912, which will in turn be able to actuate or enable the second magnet on the electronic device 20 to align with the first magnet 191 on the charger 10, thereby enabling alignment of the electrical connector of the electronic device 20 with the first electrical connector 12 on the charger 10.

The first magnetic pole 1911 may be one of the N-class, S-class, the second magnetic pole 1912 may be another of the N-class, S-class; the third magnetic pole may be one of the N-class, S-class, and the fourth magnetic pole may be another of the N-class, S-class.

The first anti-misalignment device 19 may include a first magnet 191, or may include a plurality of first magnets 191 spaced apart, and the number of second magnets included in the second anti-misalignment device 21 of the electronic device 20 may be set equal to and substantially one-to-one with the number of first magnets 191 included in the first anti-misalignment device 19 of the charger 10. When the first anti-misalignment device 19 includes a plurality of first magnets 191, the plurality of first magnets 191 and the plurality of second magnets can cooperate with each other to play a better positioning effect, and is conducive to improving the correction speed of the electronic device 20 on the first charging surface 1111.

In an example of the present application, the first anti-misalignment device 19 comprises two first magnets 191, the two first magnets 191 being disposed opposite to each other, the two first magnets 191 being disposed substantially on opposite sides of the first electrical connector 12.

It is noted that if the extension direction of the first magnet 191 is substantially parallel to the first charging surface 1111, the extension direction of the second magnet may be substantially parallel to the second charging surface 22 or substantially perpendicular to the second charging surface 22; if the extension direction of the second magnet is substantially parallel to the second charging surface 22, the extension direction of the first magnet 191 may be substantially parallel to the first charging surface 1111 or substantially perpendicular to the first charging surface 1111. With the electronic device 20 placed on the first charging surface 1111, the first charging surface 1111 may be substantially parallel to the second charging surface 22.

If the first charging surface 1111 is non-planar, the direction of extension of the first magnet 191 being substantially parallel/perpendicular to the first charging surface 1111 may be as follows: the direction of extension of the first magnet 191 is substantially parallel/perpendicular to a plane defined by a plurality of point locations in the first charging surface 1111 that are used to contact the electronic device 20. For example, the first charging surface 1111 has three point locations in the first charging surface 1111 for contacting the electronic device 20, and the plane defined by the three point locations is substantially parallel/perpendicular to the extension direction of the first magnet 191.

If the second charging surface 22 is non-planar, the direction of extension of the second magnet being substantially parallel/perpendicular to the second charging surface 22 may be as follows: the direction of extension of the second magnet is parallel/perpendicular to a plane defined by a plurality of point locations in the second charging surface 22 used to make contact with the charger 10. For example, the second charging surface 22 has three point locations in the second charging surface 22 for contacting the charger 10, the plane defined by the three point locations being substantially parallel/perpendicular to the extension direction of the second magnet.

The first anti-misalignment device 19 may also include a first magnet 191 extending in a direction substantially parallel to the first charging surface 1111 and a third magnet (not shown in the drawings) extending in a direction substantially perpendicular to the first charging surface 1111, and the second anti-misalignment device 21 may include a second magnet (not shown in the drawings) for use with the first magnet 191 and extending in a direction substantially parallel to the second charging surface 22, and a fourth magnet (not shown in the drawings) for use with the third magnet and extending in a direction substantially perpendicular to the second charging surface 22, without being limited in this regard. the second magnet for use with the first magnet 191 and extending in a direction generally perpendicular to the second charging surface 22, and a fourth magnet for use with the third magnet (not shown in the drawings), without limitation. The third magnet has opposing fifth and sixth magnetic poles in the extension direction, and the fourth magnet has opposing seventh and eighth magnetic poles in the extension direction.

It is to be noted that the extension direction of the magnets (e.g., the first magnet 191, the second magnet) mentioned in the examples of the present application is parallel to the first charging surface 1111, and it can be understood that the extension direction of the magnets is approximately parallel to the first charging surface 1111, i.e., an angle between the two can be regarded as parallel within a first preset range, wherein the first preset range can be flexibly designed in accordance with practical needs, e.g., the first predetermined range may be greater than or equal to 0° and less than or equal to 5°, and so on.

It is to be noted that the extension direction of the magnets (e.g., the first magnet 191, the second magnet, the third magnet, the fourth magnet) mentioned in the example of the present application is perpendicular to the first charging surface 1111, and it can be understood that the extension direction of the magnets is approximately perpendicular to the first charging surface 1111, i.e., an angle between the two can be regarded as perpendicular within the second predetermined range, wherein the second predetermined range can be flexibly designed in combination with practical needs, for example, the second predetermined range may be greater than or equal to 0° and less than or equal to 5°, and so on.

The first anti-misalignment device 19 may be provided inside the charger 10 or on a surface of the charger 10. In the example of the present application, the first anti-misalignment device 19 is provided in the interior of the charger 10 and is connected to the same carrier, the mount 142, as the first electrical connector 12.

### Example 2

This example is substantially similar to example one, and the following description focuses on the differences between this example and example one:

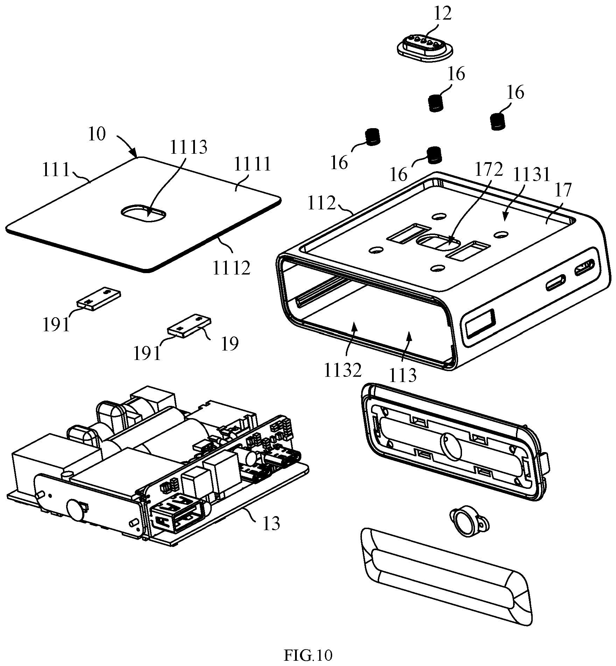

Referring to FIG. 10, in this example, the first electrical connector 12 and the cover 111 are movable relative to each other as follows: the first electrical connector 12 is connected to the cassette 112, and the cover 111 is movable relative to the cassette 112 to enable the charger 10 to switch between the first state and the second state. In this example, when the charger 10 is switched between the first state and the second state, the first electrical connector 12 may remain motionless.

The first electrical connector 12 may be directly provided on and electrically coupled to the main circuit board 13 within the housing 11, simplifying the wiring process of the charger 10.

The spacer 17 is located in the housing 11 and connected to the cassette 112, the spacer 17 divides the holding chamber 113 of the housing 11 into a first chamber 1131 and a second chamber 1132, the first chamber 1131 is closer to the cover 111 than the second chamber 1132, the first chamber 1131 is connected to the charging port 1113 of the cover 111, and the spacer 17 is provided with a connection hole 172 that connects the first chamber 1131 to the second chamber 1132, the first electrical connector 12 is provided corresponding to the connection hole 172, and the cover 111 and the main circuit board 13 can be moved relative to one another to achieve the charging of the main circuit board. The first chamber 1131 is connected to the charging port 1113 of the cover 111, the spacer 17 is provided with a connecting hole 172 connecting the first chamber 1131 to the second chamber 1132, the main circuit board 13 is provided in the second chamber 1132, the first electrical connector 12 is provided in correspondence with the connecting hole 172, and the cover 111 and the spacer 17 are movable relative to each other to realize that the cover 111 and the cartridge 112 can be movable relative to each other.

The elastic member 16 may be provided between the carrier (e.g., the main circuit board 13) connected to the first electrical connector 12 and the cover 111, and the elastic member 16 may likewise drive the charger 10 to switch from the first state to the second state. For example, the elastic member 16 is designed to be in a deformed state in the first state, and the elastic member 16 is in a restored state in the second state, and the elastic restoring force of the elastic member 16 is used to realize the switching of the charger 10 from the first state to the second state, and in this way, the switching of the charger 10 from the first state to the second state can be realized without the need for additional devices, and the structure of the charger 10 can be simplified.

If the charger 10 is to be switched from the second state to the first state, this can be achieved by the gravity of the electronic device 20 when the electronic device 20 is placed on the first charging surface 1111, so that the switching of the charger 10 from the second state to the first state can be realized without the need for additional devices, simplifying the structure of the charger 10. The gravity of the electronic device 20 can overcome the elastic force of the elastic member 16, so that the elastic member 16 can undergo deformation (e.g., the elastic member 16 is compressed), so as to realize the switching of the charger 10 from the second state to the first state.

In this application example, the elastic member 16 may be directly coupled between the main circuit board 13 and the cover 111, and/or, the elastic member 16 may be provided between the spacer 17 and the cover 111.

In an example of the present application, the first anti-misalignment device 19 may be coupled to at least one of the main circuit board 13, the spacer 17, and the cover 111.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A charger comprising a housing including a cassette and a cover, wherein the cassette has an opening, and the cover is coupled to the cassette and is positioned corresponding to the opening.

Clause 2. The cover has a first charging surface and a first inner wall surface opposite to the first charging surface.

Clause 3. The cover is provided with a charging port running through the first charging surface and the first inner wall surface.

Clause 4. The charger of any one of clauses 1-3, further comprising a first electrical connector positioned corresponding to the charging port.

Clause 5. The charger of any one of clauses 1-4, wherein the first electrical connector and the housing are movable relative to each other to switch the charger between a first state and a second state, wherein in the first state, at least a portion of the first electrical connector projects outwardly from the first charging surface.

Clause 6. In the second state, the first electrical connector does not project outwardly from the first charging surface.

Clause 7. The charger of any one of clauses 1-6, further comprising a first anti-misalignment device connected to a same carrier as the first electrical connector, the first anti-misalignment device comprising one or more first magnets.

Clause 8. The charger of any one of clauses 1-7, wherein when an electronic device is provided on the first charging surface, the first anti-misalignment device is configured to magnetically approach each other with a second anti-misalignment device of the electronic device to enable a switching of the charger from the second state to the first state.

Clause 9. The charger of any one of clauses 1-8, wherein each of the one or more first magnets has opposing first magnetic pole and second magnetic pole along an extension direction, a polarity of the first magnetic pole being opposite to a polarity of the second magnetic pole, and the extension direction of the corresponding first magnet being parallel to the first charging surface;

Clause 10. The charger of any one of clauses 1-9, wherein the same carrier is located within the housing.

Clause 11. The charger of any one of clauses 1 - 10, wherein the first anti-misalignment device comprises two of the first magnets located on opposite sides of the first electrical connector.

Clause 12. The charger of any one of clauses 1 - 11, further comprising a main circuit board disposed within the housing.

Clause 13. The charger of any one of clauses 1 - 12, further comprising a first circuit board disposed within the housing, the first circuit board being closer to the cover than the main circuit board, the first circuit board being connected to the first electrical connector and electrically coupled to the first electrical connector, the first circuit board being movable relative to the housing to enable that the first electrical connector is movable relative to the housing.

Clause 14. The charger of any one of clauses 1 - 13, wherein the first circuit board is connected to a mount and the first electrical connector is connected to the mount on the first circuit board.

Clause 15. The charger of any one of clauses 1 -14, further comprising a second circuit board disposed within the housing, the second circuit board being connected to the cover, the second circuit board being electrically coupled to the main circuit board, the second circuit board being provided in such a way as to avoid the first electrical connector, and the first circuit board being movable in relation to the second circuit board to enable that the first electrical connector is movable in relation to the housing,

Clause 16. The charger of any one of clauses 1 - 15, wherein the first circuit board is connected to a second electrical connector, the second circuit board is connected to a third electrical connector used in conjunction with the second electrical connector,

Clause 17. The charger of any one of clauses 1 - 16, wherein in the first state, the second electrical connector is in contact with and electrically coupled to the third electrical connector to electrically couple the first circuit board with the main circuit board via the second circuit board.

Clause 18. The charger of any one of clauses 1 - 17, wherein in the second state, the second electrical connector is separate and de-coupled from the third electrical connector to electrically de-couple the first circuit board from the second circuit board, and the main circuit board.

Clause 19. The charger of any one of clauses 1 - 18, further comprising an elastic member connecting a carrier to which the first electrical connector is connected and the cover, the elastic member being configured to enable the charger to switch from the first state to the second state.

Clause 20. The charger of any one of clauses 1 - 19, wherein in the first state, the at least the portion of the first electrical connector is located on one side of the first charging surface facing away from the first inner wall surface, wherein in the second state, the first electrical connector is located on another side of the first charging surface facing the first inner wall surface.

Clause 21. The charger of any one of clauses 1 - 20, wherein the first electrical connector is connected to the cassette, the cover and the cassette being movable relative to each other to switch the charger between the first state and the second state.

Clause 22. The charger of any one of clauses 1 - 21, further comprising a spacer disposed in the housing and connected to the cassette.

Clause 23. The charger of any one of clauses 1 - 22, wherein the spacer divides a holding chamber of the housing into a first chamber and a second chamber, the first chamber is closer to the cover than the second chamber.

Clause 24. The charger of any one of clauses 1 - 23, wherein the first chamber is connected to the charging port of the cover, the spacer is provided with a connecting hole connecting the first chamber to the second chamber, the main circuit board is located in the second chamber, the first electrical connector is positioned corresponding to the connecting hole, the cover is movable relative to the spacer to enable relative movement of the cover and the cassette.

Clause 25. The charger of any one of clauses 1 - 24, further comprising an elastic member positioned between the spacer and the cover, the elastic member being configured to enable the charger to switch from the first state to the second state.

Clause 26. The charger of any one of clauses 1 - 25, wherein when an electronic device is provided on the first charging surface, the cover is configured to enable the charger to switch from the second state to the first state under a force of gravity of the electronic device.

Clause 27. A system comprising: a charger of any one of clauses 1 - 26; and an electronic device configured to be removably coupled with the first charging surface of the charger.

In the description of the present application, it is to be understood that the terms "first", "second", etc. are used for descriptive purposes only and are not to be understood as indicating or implying relative importance. To a person of ordinary skill in the art, the specific meaning of the above terms in the present application may be understood in specific cases. Furthermore, in the description of the present application, unless otherwise indicated, "plurality" means at least two, e.g., two, three, four, and the like. The character "and/or" describes an association relationship of the associated objects, and indicates that three kinds of relationships may exist, e.g., A and/or B. For example, it may be indicated that A alone exists, both A and B exist, and B alone exists. The character "/" generally indicates an "or" relationship between an associated object and an associated object.

The above disclosure is only a better example of this application, of course, cannot be used to limit the scope of the rights of this application, therefore, according to the claims of this application made by the equivalent changes, is still covered by the scope of this application.

## Claims

1. A charger comprising:
- a housing including a cassette and a cover, wherein the cassette has an opening, and the cover is coupled to the cassette and is positioned corresponding to the opening, wherein the cover has a first charging surface and a first inner wall surface opposite to the first charging surface, and wherein the cover is provided with a charging port running through the first charging surface and the first inner wall surface; and
- a first electrical connector positioned corresponding to the charging port,
wherein the first electrical connector and the housing are movable relative to each other to switch the charger between a first state and a second state, wherein in the first state, at least a portion of the first electrical connector projects outwardly from the first charging surface, and in the second state, the first electrical connector does not project outwardly from the first charging surface.

2. The charger according to claim 1, further comprising:
- a first anti-misalignment device connected to a same carrier as the first electrical connector, the first anti-misalignment device comprising one or more first magnets,
wherein when an electronic device is provided on the first charging surface, the first anti-misalignment device is configured to magnetically approach a second anti-misalignment device of the electronic device to enable a switching of the charger from the second state to the first state.

3. The charger according to claim 2,
wherein each of the one or more first magnets has opposing first magnetic pole and second magnetic pole along an extension direction, a polarity of the first magnetic pole being opposite to a polarity of the second magnetic pole, and the extension direction of the corresponding first magnet being parallel to the first charging surface; and/or wherein the same carrier is located within the housing.

4. The charger according to any one of claims 2 and 3, wherein the first anti-misalignment device comprises two of the first magnets located on opposite sides of the first electrical connector.

5. The charger according to any one of claims 1-4, further comprising:
- a main circuit board disposed within the housing; and
- a first circuit board disposed within the housing, the first circuit board being closer to the cover than the main circuit board, the first circuit board being connected to the first electrical connector and electrically coupled to the first electrical connector, the first circuit board being movable relative to the housing to enable that the first electrical connector is movable relative to the housing.

6. The charger according to claim 5, wherein the first circuit board is connected to a mount and the first electrical connector is connected to the mount on the first circuit board.

7. The charger according to any one of claims 5 and 6, further comprising:
- a second circuit board disposed within the housing, the second circuit board being connected to the cover, the second circuit board being electrically coupled to the main circuit board, the second circuit board being provided in such a way as to avoid the first electrical connector, and the first circuit board being movable in relation to the second circuit board to enable that the first electrical connector is movable in relation to the housing,
wherein:
- the first circuit board is connected to a second electrical connector, the second circuit board is connected to a third electrical connector used in conjunction with the second electrical connector,
- in the first state, the second electrical connector is in contact with and electrically coupled to the third electrical connector to electrically couple the first circuit board with the main circuit board via the second circuit board, and
- in the second state, the second electrical connector is separate and de-coupled from the third electrical connector to electrically de-couple the first circuit board from the second circuit board, and the main circuit board.

8. The charger according to any one of claims 1-7, further comprising:
- an elastic member connecting a carrier to which the first electrical connector is connected and the cover, the elastic member being configured to enable the charger to switch from the first state to the second state.

9. The charger according to any one of claims 1-8, wherein
- in the first state, the at least the portion of the first electrical connector is located on one side of the first charging surface facing away from the first inner wall surface,
- in the second state, the first electrical connector is located on another side of the first charging surface facing the first inner wall surface.

10. The charger according to any one of claims 1-9, wherein the first electrical connector is connected to the cassette, the cover and the cassette being movable relative to each other to switch the charger between the first state and the second state.

11. The charger according to any of claims 1-10, further comprising:
- a spacer disposed in the housing and connected to the cassette, wherein the spacer divides a holding chamber of the housing into a first chamber and a second chamber, the first chamber is closer to the cover than the second chamber,

12. The charger according to claim 11, wherein the first chamber is connected to the charging port of the cover, the spacer is provided with a connecting hole connecting the first chamber to the second chamber, the main circuit board is located in the second chamber, the first electrical connector is positioned corresponding to the connecting hole, the cover is movable relative to the spacer to enable relative movement of the cover and the cassette.

13. The charger according to claim 12, further comprising:
- an elastic member positioned between the spacer and the cover, the elastic member being configured to enable the charger to switch from the first state to the second state.

14. The charger according to claim 13, wherein when an electronic device is provided on the first charging surface, the cover is configured to enable the charger to switch from the second state to the first state under a force of gravity of the electronic device.

15. A system comprising:
- a charger according to any of claims 1-14; and
- an electronic device configured to be removably coupled with the first charging surface of the charger.
